**Europäisches Patentamt**

**European Patent Office**

**Office européen des brevets**

(11) Numéro de publication : **0 159 274 B2**

(12) **NOUVEAU FASCICULE DE BREVET EUROPEEN**

(45) Date de publication du nouveau fascicule du brevet : **20.01.93 Bulletin 93/03**

(21) Numéro de dépôt : **85400747.3**

(22) Date de dépôt : **16.04.85**

(51) Int. Cl.⁵ : **B60C 17/06, B60C 15/028**

(54) **Dispositif de verrouillage à fonctions multiples pour le montage d'une enveloppe de pneumatique sur une jante de roue.**

(30) Priorité : **19.04.84 FR 8406193**
**23.07.84 FR 8411649**
**02.04.85 FR 8504967**

(43) Date de publication de la demande :
**23.10.85 Bulletin 85/43**

(45) Mention de la délivrance du brevet :
**24.08.88 Bulletin 88/34**

(45) Mention de la décision concernant
l'opposition :
**20.01.93 Bulletin 93/03**

(84) Etats contractants désignés :
**AT BE CH DE GB IT LI LU NL SE**

(56) Documents cités :
**EP-A- 0 011 698**
**EP-A- 0 036 908**
**EP-A- 0 104 977**

(56) Documents cités :
**EP-A- 0 134 035**
**DE-A- 2 445 968**
**DE-A- 2 817 394**
**FR-A- 803 430**
**FR-A- 2 158 268**
**FR-A- 2 246 405**
**GB-A- 2 000 733**
**US-A- 4 383 566**

(73) Titulaire : **HUTCHINSON**
**2 rue Balzac**
**F-75008 Paris (FR)**

(72) Inventeur : **Grillo, Christian Charles François**
**22, Avenue Hector Berlioz**
**F-95820 Bruyères-sur-Oise (FR)**
Inventeur : **Seradarian, Pascal**
**10, Wood Hollow Road**
**Lawrence Ville, NJ 08648 (US)**

(74) Mandataire : **Orès, Bernard et al**
**Cabinet ORES 6, Avenue de Messine**
**F-75008 Paris (FR)**

## Description

La présente invention est relative à un dispositif de verrouillage à fonctions multiples propre à être monté dans une enveloppe de pneumatique, du type énoncé dans le préambule de la revendication 1.

Ce dispositif de verrouillage fait appel à une bande ou un anneau de maintien et de verrouillage des talons du pneu contre les rebords de la jante de la roue, quelle que soit la pression de gonflage du pneu. De telles bandes ou anneaux maintenus en position sur la jante sont connus et ont pour but de limiter l'affaissement en cas de dégonflage du pneu ou de crevaison. L'épaisseur de ces bandes est supérieure à la hauteur du rebord de la jante pour éviter un affaissement complet du pneu en cas de crevaison. Par exemple, conformément à une réalisation décrite dans le Brevet français no 1 304 992, la bande de verrouillage est montée sur la jante sous la forme d'une anneau qui s'applique sur les surfaces internes des talons, sous une tension préalable, de façon à comprimer les talons contre les rebords de la jante. Dans un tel pneu, la chambre à air n'est pas tubulaire mais est constituée par une enveloppe fendue qui entoure la bande de verrouillage, les bords de l'enveloppe fendue étant maintenus par serrage entre la bande et le fond de la jante.

Le Brevet américain no 2 339 542 décrit également un anneau de verrouillage de pneu, associé à une chambre à air et conçu pour maintenir un pneu sur une jante. Toutefois, cet anneau, qui est en caoutchouc, est compressible et déformable. Comme son expansion radiale est empêchée par des fils métalliques qui y sont incorporés, lorsque le pneu est gonflé et en position sur la jante avec le disque de la roue monté de manière à être bloqué sur le moyeu de la roue en butée contre la jante, l'anneau s'arc-boute pour prendre une forme convexe. Or ce flambage annule l'une des fonctions essentielles de l'anneau de verrouillage, qui est d'empêcher la rotation du pneu sur la jante en service sur n'importe quel terrain avec une pression de gonflage inférieure à la normale. Ceci s'applique également à l'anneau de verrouillage qui fait l'objet du Brevet américain no 2 857 951, qui prend automatiquement une forme arquée lorsque le pneu est dégonflé et qui est extensible sous l'action de la pression de l'air de gonflage pour augmenter sa largeur radiale jusqu'à devenir plan.

Dans un autre dispositif connu qui correspond au préambule de la revendication 1 (cf. le Brevet français no 2 246 405) et qui est prévu pour les pneus sans chambre, la bande ou anneau de verrouillage qu'il comporte est également appliqué sur la jante avec une tension préalable, mais sa largeur est supérieure à l'écartement intérieur des talons du pneu lorsqu'ils sont appliqués sur les rebords de la jante.

Le Brevet américain no 4177 849 fait en outre connaître un dispositif de sécurité inclus dans un pneu, qui est constitué de deux éléments distincts, è savoir un manchon protecteur qui et en caoutchouc naturel ou synthétique ou en une matière plastique présentant un degré approprié d'élasticité, et qui est en forme de H avec une partie annulaire constituant une gorge entre deux parties saillantes en direction du haut et du bas respectivement, tandis que la face inférieure de ce manchon protecteur est évidée pour pouvoir coopérer avec le deuxième élément, qui est une pièce d'écartement des talons du pneu, constituée par un anneau formé d'une pluralité de plaques métalliques ou en matière plastique armée, reliées entre elles de façon articulée. Dans cette structure le manchon protecteur joue le rôle d'élément de sécurité permettant la poursuite du roulage en cas de crevaison, tandis que le rôle de pièce de verrouillage des talons du pneu en position sur la jante est dévolu à la pièce d'écartement.

La Demanderesse a constaté au bout de plusieurs années d'essais, que ces types de manchons de verrouillage présentent un inconvénient majeur en ce qu'il est nécessaire de les mettre sous tension pour les mettre en place sur la jante de la roue.

Un progrès significatif par rapport aux dispositifs de l'Art antérieur a consisté en l'introduction d'un dispositif de montage de pneus comportant un manchon de verrouillage susceptible d'être aisément glissé sur une jante démontable en deux ou en trois parties. C'est sur un tel dispositif qu'est fondée la Demande de Brevet français no 82 00607 publiée sous le no 2 519 912.

La présente invention à en conséquence pour but de pourvoir à un dispositif de verouillage à fonctions multiples, qui répond mieux aux nécessités de la pratique que les dispositifs de l'Art antérieur visant au même but, en particulier en ce qu'il n'est plus nécessaire de l'appliquer sur la jante avec une tension préalable, et dont la fonction est telle que les talons du pneu sont maintenus en toutes circonstances en contact avec les rebords de la jante, en ce que le dispositif conforme à l'invention non seulement empêche un déjantage des talons du pneu, consécutif à une crevaison, mais également empêche la rotation du pneu sur la jante en service sur n'importe quel terrain (et ceci même à des pressions de gonflage très basses comprises entre 0 et 1 bar de pression manométrique).

Le dispositif de vérouillage selon l'invention permet l'utilisation d'un système centrale de gonflage de pneus, dans lequel le manchon peut être aisément monté sur une jante de pneu et dans lequel il est conformé de telle manière qu'il peut aisément s'adapter à différentes dimensions de jantes.

Le dispositif de verouillage selon l'invention améliore substantiellement la longévité du pneu dans lequel il est monté, dans n'importe quelles conditions de fonctionnement, par rapport aux dispositifs connus, dont le poids est réduit et dont le prix de revient est plus bas que les prix de revient des dispositifs de l'Art antérieur.

En outre, le dispositif de verouillage conforme à la présente invention présente l'avantage de pouvoir être démonté manuellement avec facilité lorsque l'on utilise une jante en deux parties, alors que les dispositifs de l'Art antérieur requièrent, au moins pour leur démontage, des machines spéciales de déverouillage.

Le dispositif selon l'invention présente également l'avantage de pouvoir être monté facilement dans un pneu avec des moyens très simple, notamment à l'aide d'une sangle à cliquet classique, et ce même dans le cas de très gros pneu.

La présente invention a pour objet un dispositif de verrouillage à fonctions multiples pour le montage d'une enveloppe de pneumatique ou pneu sur une roue du type démontable, comprenant :

- une jante qui comporte deux rebords opposés en contact avec deux talons correspondants dudit pneu, et

- un manchon annulaire encerclant la jante et comportant :

  - au moins une ouverture pour permettre le passage de l'air de gonflage ;
  - une dimension horizontale, au niveau de sa base, qui est sensiblement supérieure à l'intervalle intérieur qui sépare les talons dudit pneu ;
  - une structure annulaire de base à partir de laquelle fait saillie au moins une projection de support de la bande de roulement du pneu, en cas de crevaison, qui est orientée en direction de la face interne du pneu opposée à la jante ;
  - au moins une armature de renforcement, annulaire et continue, qui est capable de rendre le manchon inextensible à l'emplacement de ladite armature le manchon présentant, avant son montage sur la jante, un diamètre intérieur sensiblement égal au diamètre extérieur du fond de la jante, caractérisé en ce que :
    - l'armature de renforcement est réalisée sous forme de couche ou de nappe, notamment de câblé ou de tissu textile ou de câblé métallique, et s'étend sensiblement sur toute la largeur de ladite structure annulaire et est périphérique, à savoir disposée à la partie radialement extérieure de celle-ci pour conserver constant le diamètre correspondant à son emplacement ;
    - le manchon se compose d'une pluralité d'éléments annulaires continus et distincts, qui sont juxtaposés axialement et qui comprennent chacun une partie de ladite structure annulaire de base, de manière à constituer conjointement une structure annulaire unique, et au moins une projection.

Selon une disposition préférée de ce mode de réalisation, le manchon se compose de deux éléments annulaires distincts et juxtaposés comprenant chacun au moins une projection saillante.

Selon une modalité avantageuse de cette disposition, les deux éléments sont juxtaposés exclusivement au niveau de la structure annulaire de base, les faces latérales internes des deux projections saillantes les plus internes de chaque élément étant espacés l'une de l'autre.

Les deux éléments juxtaposés sont symétriques par rapport au plan radial médian de la jante et comportant chacun une seule projection.

Conformément à l'invention les faces supérieures des deux projections sont horizontales.

Egalement conformément à l'invention, les faces supérieures des deux projections sont inclinées vers l'extérieur.

Encore également conformément à l'invention, les faces supérieures des deux projections sont inclinées vers l'intérieur du pneu, à savoir vers ledit plan radial médian et vers la jante.

Selon une autre modalité avantageuse de cette disposition, les deux éléments sont juxtaposés sur toute leur hauteur, à savoir au niveau de la structure annulaire de base et des faces latérales internes des deux projections saillantes les plus internes, ces dernières projections juxtaposées constituants ainsi les deux parties d'une projection unique centrale.

Conformément à cette modalité, les deux éléments juxtaposés sont symétriques par rapport au plan radial médian de la jante et comportent chacun une projection, les deux projections ainsi juxtaposées constituants toujours les deux parties d'une projection unique centrale.

Dans ce cas, les faces supérieures des deux parties juxtaposées de ladite projection unique centrale horizontales.

Alternativement, les faces supérieures des deux parties juxtaposées de ladite projection unique centrale sont dirigées vers la face interne du pneu et convergent dans le plan radial médian du pneu de manière que la face supérieure de ladite projection centrale est en forme de V à angle et à grande ouverture, avec sommet arrondi.

Encore également conformément à l'invention, les faces supérieures des deux parties juxtaposées de ladite projection unique centrale sont dirigées vers le fond de la jante et convergent dans le plan radial médian du pneu de manière que la face supérieure de cette projection unique centrale est en forme de V à angle rentrant et à grande ouverture.

Selon une autre disposition avantageuse de ce mode de réalisation, le manchon se compose de trois éléments annulaires distincts et juxtaposés, à savoir de deux éléments latéraux et d'un élément central qui sépare ces deux éléments latéraux.

Selon une modalité préférée de cette disposition, l'élément central est interchangeable en fonction des diverses largeurs de jantes.

Selon une modalité avantageuse de cette disposition, les deux éléments latéraux sont pourvus chacun d'au moins une projection saillante.

Selon une autre modalité avantageuse de cette disposition, les deux éléments latéraux ainsi que l'élément central sont pourvus chacun d'au moins une projection saillante, lesquelles projections sont espacées l'une de l'autre.

Conformément à l'invention, les deux éléments latéraux ainsi que l'élément central sont symétriques par rapport au plan radial médian de la jante et chaque élément comporte une seule projection.

Conformément à l'invention, les faces supérieures des deux projections latérales et de la projection centrale sont horizontales.

Egalement conformément à l'invention, les faces supérieures des deux projections latérales sont inclinées vers l'extérieur, tandis que la face supérieure de la projection centrale est horizontale.

Encore également conformément à l'invention, les faces supérieures des deux projections latérales sont inclinées vers l'intérieur, à savoir vers ledit plan radial médian et vers la jante, tandis que la face supérieure de la projection centrale est horizontale.

Selon un autre mode de réalisation avantageux du dispositif conforme à l'invention, le manchon élastomère comporte aussi un élément annulaire continu supplémentaire qui est superposé:

- auxdits deux éléments juxtaposés symétriques par rapport au plan radial médian de la jante et pourvus chacun d'une seule projection dont la face supérieure est inclinée vers l'intérieur du pneu, ou

- auxdits trois éléments juxtaposés, deux latéraux et un central, symétriques par rapport au plan central du pneu et pourvus chacun d'une seule projection, dont la face supérieure des projections latérales est inclinée vers l'intérieur du pneu, ou encore

- auxdits deux éléments juxtaposés comportant une projection unique centrale dont la face supérieure est en forme de V à angle rentrant et à grande ouverture,

lequel élément annulaire superposé présente sa face inférieure qui regarde vers la jante conformée de manière à s'adapter aux faces supérieures de la projection unique, qui est réalisée en une seule pièce ou par juxtaposition de deux pièces distinctes, ou des différentes projections du manchon sur lesquelles il vient en appui.

Selon une disposition préférée de ce mode de réalisation, les dimensions internes que l'élément superposé présente au niveau des portions de sa face inférieure qui viennent en appui sur les projections correspondantes des éléments distincts juxtaposés, sont sensiblement inférieures aux dimensions d'encombrement radial de ces projections, de manière que l'élément superposé est appliqué par serrage autour desdits éléments distincts juxtaposés.

Selon une autre disposition avantageuse de ce mode de réalisation, la face inférieure de l'élément superposé présente, entre deux projections contiguës, une portion en saillie, dirigée vers la jante. qui est destinée à constituer une butée permettant à l'élément superposé de conserver sa position en cas de roulage à plat du pneu, et ce également sous l'effet d'efforts axiaux centrifuges agissant sur le pneu.

Selon une autre disposition préférée de ce mode de réalisation, également ledit élément superposé comporte au moins une armature de renforcement annulaire, sous forme de couche ou de nappe, qui est noyée dans sa base et est destinée à rendre cet élément superposé inextensible.

Selon encore une autre disposition avantageuse de ce mode de réalisation, ledit élément superposé comporte au moins un évidement d'allègement, notamment annulaire et ménagé à sa partie supérieure.

Selon un autre mode de réalisation préféré du dispositif conforme à l'invention, au moins les projections les plus externes desdits éléments juxtaposés, ou, en alternative, l'éventuel élément - lorsque celui-ci est présent - qui est superposé auxdits éléments juxtaposés, dont se compose ledit manchon élastomère, sont pourvus d'un bourrelet à leur extrémité libre.

Selon une disposition préférée de ce mode de réalisation, ledit bourrelet est annulaire et continu, à savoir qu'il entoure la totalité de la périphérie de ladite extrémité libre.

Selon une modalité avantageuse de cette disposition, ledit bourrelet annulaire est prévu pour border au moins le côté externe de l'extrémité libre d'au moins les projections les plus externes desdits éléments juxtaposés ou, en alternative, les deux côtés - nécessairement externes- de l'extrémité libre dudit élément superposé, lorsque celui-ci est présent. Selon une autre disposition préférée, ledit bourrelet est dépourvu d'angles vifs.

Selon encore une autre disposition, ledit bourrelet présente une forme sensiblement trapézoïdale.

Selon une modalité avantageuse de cette disposition, dans le cas où ledit bourrelet borde lesdites projections, ce bourrelet présente sensiblement la forme d'un trapèze rectangle dont les dimensions sont telles que:

$$B = \frac{l}{2} \pm 25\%$$

et

$$b = \frac{l}{4} \pm 25\%,$$

où:

- l est la largeur de la face supérieure de la projection ou des projections concernées,
- B est la grande base du trapèze qui forme le bourrelet, et

- b est la petite base du trapèze qui forme ce bourrelet.

D'autres modes de réalisation de l'invention sont énoncés dans les revendications 34 et 35.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:

- la figure 1 est une vue en coupe d'un premier mode de réalisation,

- la figure 2 est une vue en coupe d'un deuxième mode de réalisation,

- la figure 3 est une vue en coupe montrant l'utilisation du mode de réalisation de la figure 1 pour monter un pneu du type à chambre sur une jante plate,

- la figure 4 est une vue en coupe qui montre l'utilisation d'un troisième mode de réalisation du dispositif de verrouillage conforme à l'invention, pour monter un pneu sans chambre sur une jante plate,

- la figure 5 est une vue en coupe montrant l'utilisation du mode de réalisation de la figure 2 pour monter un pneu sans chambre sur une jante à base creuse, le pneu étant dégonflé et supporté par les projections saillantes du mode de réalisation de la figure 2,

- la figure 6 est une vue en coupe montrant l'utilisation d'un quatrième mode de réalisation, par ailleurs similaire à celui de la figure 5, avec une jante conformée pour permettre le passage de l'air de gonflage en provenance de l'extérieur,

- la figure 7 est une vue selon la ligne VII-VII de la figure 6, faisant apparaître une solution de continuité dans la jante de compensation facultative, au point de passage d'air de la jante représentée à la figure 6,

- la figure 8 est une vue en coupe montrant l'utilisation du mode de réalisation de la figure 1 pour le montage d'un pneu sans chambre sur une jante à base creuse, le pneu ayant été partiellement dégonflé en utilisant un système central de gonflage de pneu,

- les figures 9 et 10 sont des vues en coupe d'un cinquième et d'un sixième modes de réalisation du dispositif de verrouillage conforme à la présente invention respectivement,

- la figure 11 est une vue en coupé de l'utilisation du dispositif de verrouillage de la figure 10 pour le montage d'un pneu sans chambre sur une jante comportant une jante de compensation équipée d'une cale de compensation,

- les figures 12 et 13 montrent un mode de réalisation préféré des extrémités des projections saillantes, notamment dans le cas non limitatif où le manchon comporte deux projections ou une projection unique, respectivement, et

- les figures 14 à 16 sont relatives à des modes de réalisation qui sont particulièrement avantageux lorsque la profondeur d'un pneu est relativement importante, l'exemple de figure 15 correspondant aussi au cas d'emploi d'une jante relativement étroite.

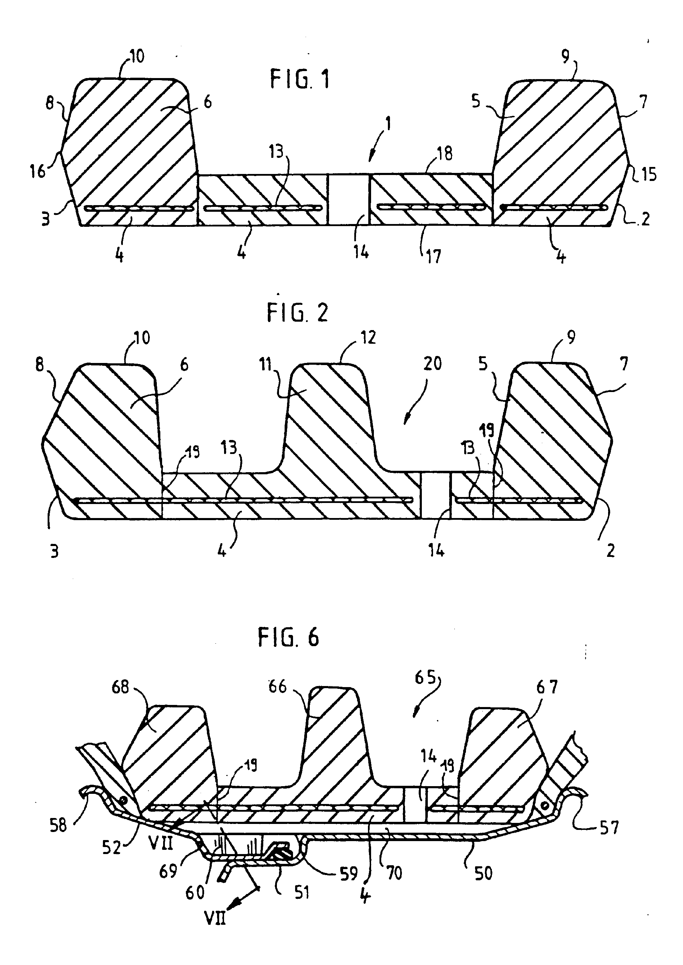

Les modes de réalisation représentés sur les figures 1,2,5,6,8 et 14 à 16 ne sont pas conformes à l'invention revendiquée étant donné que l'armature est représentée non pas dans la partie extérieure mais dans la partie intérieure de la structure annulaire de base.

Il doit être bien entendu, toutefois, que ces dessins et les parties descriptives correspondantes, sont donnés uniquement à titre d'illustration de l'invention, dont ils ne constituent en aucune manière une limitation.

La figure 1 montre un premier mode de réalisation du dispositif conforme à la présente invention, qui comporte un manchon sensiblement annulaire. Le mode de réalisation de la figure 1, de même que tous les autres modes de réalisation, comporte un élément de renforcement continu 13, tandis que le reste du manchon et en élastomère. Une dureté Shore A d'au moins 70 semble tout à fait acceptable pour l'élastomère.

L'élément de renforcement 13 peut être constitué par exemple par au moins une couche ou une nappe de tissu ou de textile naturel ou synthétique câblé ou par une couche de fil de métal du type des courroies. L'élément de renforcement 13 rend le manchon inextensible et l'oblige à conserver un diamètre extérieur constant.

Le manchon 1 représenté à la figure 1 se compose d'une structure annulaire 4 comportant un canal traversant 14 axial pour le passage d'air, et de deux projections saillantes d'extrémités 5 et 6, qui sont trois éléments réalisés séparément, par moulage par exemple, juxtaposés pour former le manchon 1. La réalisation en plusieurs éléments facilite le montage en association avec le pneu, sur la jante.

Les faces supérieures 9 et 10, respectivement, des projections saillantes 5 et 6 sont sensiblement horizontales et les faces latérales internes desdites projections sont sensiblement verticales et rectilignes. Les parois latérales extérieures desdites projections 5 et 6 sont formées de deux faces 2, 7 et 3, 8, respectivement. Les faces 2 et 7 qui forment la paroi latérale extérieure de la projection 5, présentent chacune une inclinaison par rapport à la verticale, suivant dés pentes de sens contraires; la face 2 part de la base de la projection 5 et la face 7 part de la face supérieure 9 de la projection 5; elles convergent l'une vers l'autre jusqu'à un point d'intersection 15 où elles forment un angle obtus saillant vers l'extérieur.

La paroi latérale extérieure de la projection 6, qui est formée des deux faces 3, 8, est conformée de la même manière que la paroi latérale extérieure de la projection 5 avec l'angle 16 saillant vers l'extérieur.

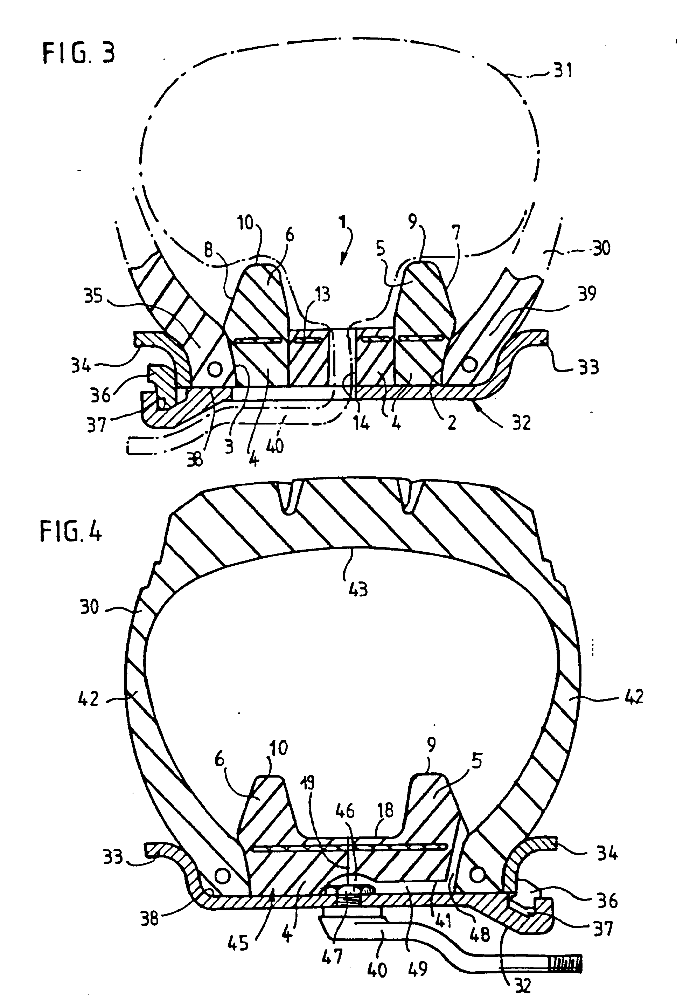

La figure 3 montre le montage d'un pneu sur une jante en utilisant le dispositif de verrouillage représenté à la figure 1

Comme le montre la figure 3, un pneu 30 comportant une chambre à air 31 est monté sur une jante 32 qui comporte un rebord fixe 33 et un rebord amovible 34 maintenu en place contre un premier talon 35 du pneu par un anneau fendu 36 inséré dans la gorge 37 formée sur le bord du fond plat 38 de la jante plate 32. Le manchon 1 dont le diamètre intérieur est sensiblement identique au diamètre extérieur du fond 38 de la jante 32, encercle le fond plat 38 de la jante. Les rebords 33, 34 s'étendent sensiblement radialement vers l'extérieur à partir du fond plat 38.

La hauteur de la structure annulaire 4 qui est l'un des constituants du dispositif de verrouillage, est au plus approximativement égale à la hauteur des rebords 33, 34 de la jante et le diamètre intérieur du manchon de verrouillage est sensiblement égal au diamètre extérieur du fond de la jante. Les projections saillantes 5, 6 avancent à l'intérieur du pneu par rapport à la face supérieure 18 de la structure annulaire 4.

Le manchon 1 est ajusté très aisément sur le fond 38 de la jante, après avoir été placé entre les deux talons 35 et 39. Les faces latérales 2, 7 et 3, 8 de ses parois latérales sont adaptées à la forme des talons et notamment à la forme de la zone comprimée des talons lorsque le dispositif est en place.

La hauteur du manchon 1 doit au minimum représenter la somme de la hauteur maximum du rebord de la jante et de l'épaisseur du talon, additionnée de la valeur de la déflexion dudit dispositif lorsqu'il est en charge. La hauteur à laquelle sont situés les angles saillants 15, 16 que font respectivement les faces latérales 2, 7 et 3, 8 dudit dispositif est au moins approximativement égale à la hauteur des rebords 33, 34 de la jante.

Le manchon 1 vient s'appliquer par sa petite base intérieure sur le fond 38 de la jante 32; toutefois, sa largeur transversale est supérieure, de 5 à 9 % et même plus, jusqu'à 15 %, à l'espace qui sépare les talons 35, 39 du pneu lorsque ces derniers sont appliqués contre les rebords 33 et 34 de la jante 32. En conséquence, pour assurer le serrage sur la jante et maintenir les talons du pneu sur cette dernière, le dispositif de verrouillage conforme à la présente invention doit subir une compression de mise en place comprise entre 5 et 9 % et même plus, jusqu'à 15 %.

Ainsi, durant la mise en place du rebord 34, la matière dont est constitué le manchon 1 est comprimée par le blocage latéral des talons 35, 39 du pneu 30 et comme le diamètre extérieur du manchon est invariable et constant en raison des caractéristiques d'inextensibilité qui lui sont conférées par l'élément de renforcement continu inextensible 13 et en raison du fait que l'élastomère est déformable mais incompressible, c'est le diamètre intérieur du manchon 1 qui a tendance à diminuer, provoquant ainsi une adhérence très ferme du manchon 1 contre le fond plat 38 de la jante 32 et empêchant ainsi le pneu 30 de glisser autour de la jante 32 quelle que soit la pression de gonflage du pneu. Ce fonctionnement est caractéristique de tous les modes de réalisation décrits et représentés.

Le manchon 1 comporte en outre un canal traversant 14 qui y est ménagé pour permettre le passage d'un conduit d'air ou de moyens de passage d'air de la valve 40 de la chambre à air 31. Dans les figures 1 et 3, le canal traversant 14 est un simple trou radial. L'élastomère qui forme le manchon 1 peut être suffisamment flexible pour permettre un serrage convenable des talons 35, 39 du pneu 30 et en blocage approprié de la jante 32 pour empêcher le glissement. Comme mentionné plus haut, une dureté Shore A au minimum égale à 70 semble tout à fait acceptable. Le manchon qui fait l'objet de la présente invention empêche la rotation du pneu 30 sur sa jante 32 lorsque le talon du pneu est en engagement de verrouillage avec la jante de la roue, et empêche également la pénétration d'eau et de diverses particules dans le pneu, permettant ainsi l'utilisation sur n'importe quel terrain à un pression de gonflage très basse (à environ 0 à 1 bar de pression manométrique) et facilitant une augmentation de la surface de support du pneu 30 sur la surface avec laquelle il est en contact.

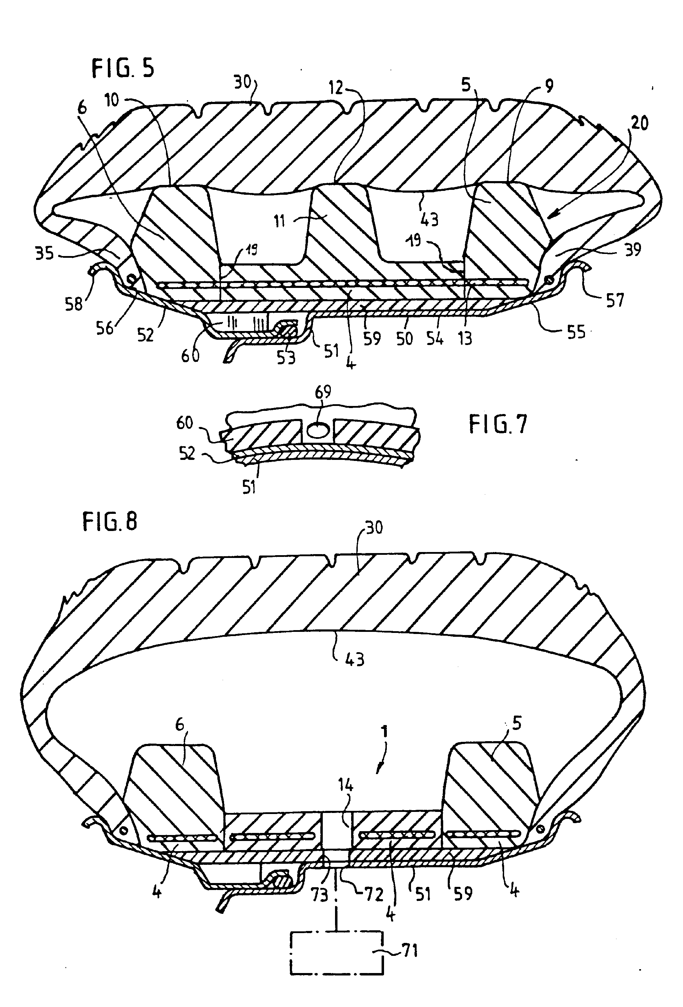

A de faibles pressions de gonflage, le poids du véhicule provoquera le bombement des flancs 42 du pneu vers l'extérieur, provoquant ainsi le rapprochement de la face 43 opposée du pneu, des faces supérieures 9, 10 des projections 5, 6 du dispositif de verrouillage. Aux pressions très basses (inférieures à 0,4 bar environ de pression manométrique), la face 43 opposée reposera sur les faces supérieures 9, 10 des projections 5, 6. Cet effect est représenté aux figures 5 et 8, dans lesquelles la bande de roulement du pneu est supposée être en contact avec le sol (c'est-à-dire que les figures 5 et 8 sont sens dessus-dessous). Comme les projections saillantes 5 et 6 avancent dans le pneu à une distance supérieure à la hauteur des rebords de la jante, le pneu sera supporté sur les projections saillantes. En l'absence d'un tel support, les flancs du pneu seraient forcés contre les rebords de la jante, ils supporteraient le poids du véhicule et pourraient subir des dommages importants. En outre, un échauffement interne par frottement à l'intérieur du pneu, conduirait à un accumulation de chaleur, ce qui endommagerait davantage encore le pneu. L'avantage que procure la disposition conforme à l'invention est de permettre une augmentation importante de la distance sur laquelle le véhicule peut rouler sans endommager le pneu. En outre, le contact avec les projections saillantes 5 et 6 entraîne un roulage plus doux et une conduite améliorée due à une stabilité latérale améliorée du pneu.

Le manchon 20 représenté à la figure 2, comprend, de même que le dispositif de verrouillage représenté à la figure 1, une structure annulaire 4 et des projections saillantes d'extrémités 5, et 6. Cependant, à la différence du mode de réalisation de la figure 1, le manchon 20 représenté à la figure 2 comprend une troisième projection saillante 11, située sensiblement au centre de la structure. Cette projection saillante 11 comporte une face supérieure horizontale 12 et des faces latérales rectilignes verticales ou légèrement coniques. De même que dans le mode de réalisation précédent, une armature de renforcement 13 est noyée dans la structure annulaire 4. Le canal traversant 14 est ménagé dans une position excentrée. La paroi externe, 2, 7 et 3, 8, respectivement, des projections saillantes 5 et 6 d'extrémité présente les mêmes caractéristiques que celles décrites en relation avec la figure 1.

Le mode de réalisation de la figure 2 est réalisé en trois parties juxtaposées, judicieusement subdivisées en fonction de la largeur de la jante et des desiderata de l'exploitant, comme le montre le mode de réalisation de la figure 1 et les segments de division dénotés par la référence 19, mais il pourrait être réalisé aussi en deux parties.

La figure 4 montre un troisième mode de réalisation du manchon, à savoir le manchon 45, qui est une variante du dispositif représenté à la figure 3, applicable au montage d'un pneu sans chambre. En ce qui concerne les éléments de la figure 4 qui sont identiques à ceux de la figure 3, ceux-ci sont désignés par les mêmes repères de référence. Le manchon 45 est illustré sous la forme d'une pièce en deux éléments juxtaposés, comme le montre le segment de division 19, mais il pourrait aussi être réalisé en trois éléments juxtaposés, comme c'est le cas du manchon 1 des figures 1 à 3.

Le manchon 45 comprend une gorge 46 centrale périphérique ménagée dans sa base 41 pour loger le bossage 47 de fixation de la valve 40 à la jante 32.

Pour permettre le passage du fluide de gonflage, la gorge centrale 46 est reliée à l'espace intérieur du pneu 30 par un canal transversal formé dans le manchon 45, comprenant une section sensiblement verticale 48 et une section sensiblement horizontale 49, la section sensiblement verticale 48 étant formée dans ou à proximité de l'une des parois latérales extérieures du manchon 45.

La figure 5 montre le manchon 20 de la figure 2 utilisé pour monter un pneu sans chambre sur une jante 50 à base creuse du type communément utilisé pour le montage des pneus sans chambre. La jante 50 comprend une première et une deuxième parties de jante 51, 52 respectivement, et un anneau torique 53 pour empêcher les fuites d'air. La partie de jante 51 comprend une surface plate 54, une partie inclinée 55 et un support arqué 57. La partie de jante 52 comporte une partie inclinée 56 et un support arqué 58.

Le profilé en caoutchouc 59 est utilisé pour compenser le fait que la jante 50 n'est pas plate sur toute sa largeur. Une bague de compensation facultative 60 peut être utilisée pour assurer un support additionnel au profilé de caoutchouc 59, comme représenté. Comme l'armature de renforcement 13 est inextensible, comme décrit plus haut, l'élastomère du manchon et forcé radialement vers l'intérieur contre le profilé de caoutchouc 59 pour assurer un verrouillage ferme sur la jante. Les talons du pneu 39, 35 sont comprimés contre les parties inclinées 55, 56 et les supports arqués 57, 58 des parties de jante 51, 52.

Le pneu 30 est représenté à la figure 5 comme étant totalement dégonflé. Sa face opposée 43 repose sur les faces supérieures horizontales 9, 10 et 12 des projections saillantes 7, 8 et 11 respectivement, procurant ainsi les bénéfices mentionnés ci-dessus en relation avec la figure 3.

La figure 6 représente un quatrième mode de réalisation du dispositif conforme à la présente invention, à savoir le manchon 65, utilisé pour monter un pneu sur une jante à base creuse telle que celle représentée à la figure 5. Le manchon 65 est identique au manchon 20 à l'exception du fait que la projection saillante centrale 66 a une hauteur plus grande que les projections saillantes latérales 67 et 68. D'une façon générale, les différents modes de réalisation de la présente invention ne sont pas limités à des projections saillantes de hauteurs égales. Par exemple à la figure 6, la projection saillante centrale 66 pourrait être plus petite que les projections saillantes 67 et 68.

A la figure 6, la jante 50 est représentée en section transversale dans sa partie où l'air de gonflage peut être introduit par le trou 69 du corps de valve. A cet emplacement de la jante, la bague de compensation facultative 60 comporte une solution de continuité, comme le montre la figure 7, pour permettre un passage aisé de l'air. Egalement à cet emplacement, un espace 70 est ménagé dans le profilé de caoutchouc 59, pour former un passage par lequel l'air de gonflage peut atteindre le canal traversant 14.

La figure 8 représente l'utilisation du manchon 1 sur un véhicule comportant un système central 71 de gonflage de pneus, de type connu. Le conducteur d'un véhicule équipé d'un système central 71 de gonflage de pneus peut, à son choix, augmenter ou diminuer la pression de gonflage des pneus alors que le véhicule roule. De cette manière, le conducteur peut régler la quantité de surface de pneu qui est en contact avec le sol, pour compenser différents types de terrains. A la figure 8 le pneu est représenté partiellement dégonflé. Bien que la figure 8 illustre l'utilisation du manchon 1, on comprendra aisément que n'importe quel mode de réalisation du manchon puisse être utilisé en relation avec un système central 71 de gonflage de pneus. Dans le mode de réalisation représenté, la pression d'air est contrôlée par l'orifice 72 pratiqué dans la jante, par l'orifice 73 ménagé dans le profilé en caoutchouc 59 et par le canal traversant 14.

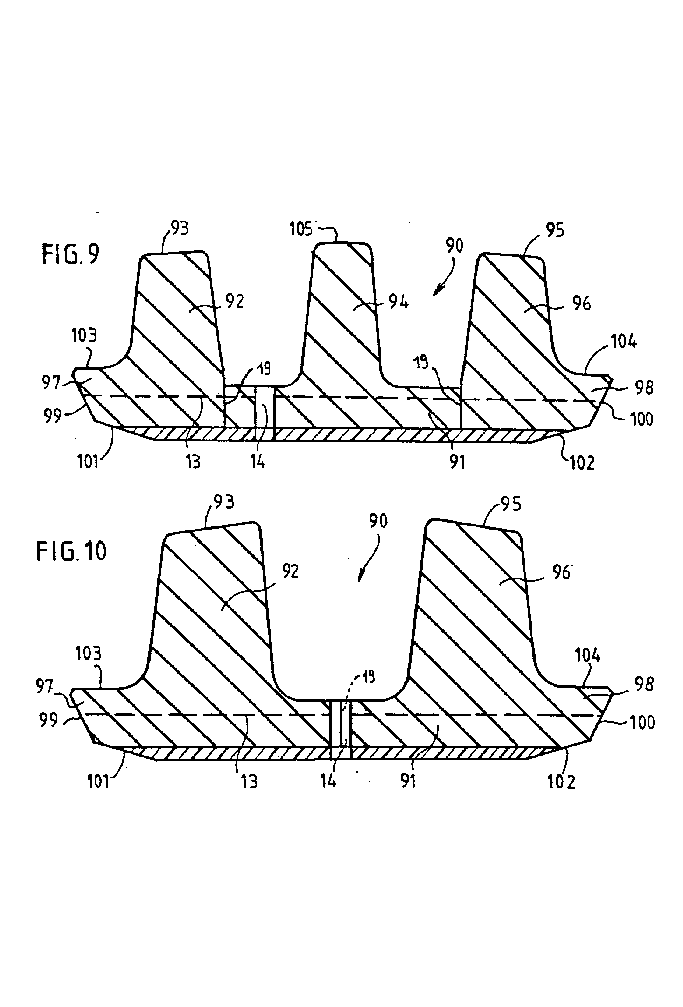

Les modes de réalisation du dispositif de verrouillage représentés aux figures 9 et 10 se distinguent des précédents essentiellement en ce que les projections saillantes y sont disposées de telle manière par rapport à la structure annulaire de base que cette dernière entoure périphériquement les projections (présence d'un angle rentrant sur la face latérale des projections).

Comme on peut le voir à la figure 9, le dispositif de verrouillage 90 en trois éléments juxtaposés conforme à l'invention comprend une projection centrale 94 et deux projections latérales 92 et 96 qui font saillie à partir d'une structure annulaire de base 91; toutefois, les projections latérales 92 et 96 ne sont pas des projections disposées aux extrémités de la structure annulaire de base qui les porte, les extrémités du dispositif étant constituées par un prolongement latéral de la structure annulaire de base qui forme la bordure périphérique 97, 98 du manchon 90. Toutefois, cette bordure périphérique 97, 98 est surélevée par rapport à la structure annulaire de base et sa hauteur est supérieure à celle de cette dernière. En outre, sa paroi latérale 99, 100∗ est oblique pour s'adapter à la forme des talons du pneu; de plus, sa basse 101, 102 fait un angle aigu par rapport à l'horizontale, pour assurer un blocage des talons du pneu sur la jante. La hauteur de la bordure périphérique 97, 98 est calculée de telle manière que sa face supérieure 103, 104 se trouve sensiblement à la même hauteur que les angles saillants 15, 16 dans les modes de réalisation représentés et décrits aux figures 1 à 8.

Alors que la projection centrale 94 présente une face supérieure sensiblement horizontale, les projections latérales 92 et 96 comportent des faces supérieures 93 et 95 présentant une faible inclinaison sur l'horizontale, divergente en direction de l'extérieur pour assurer un support adapté de la face opposée 43 du pneu, en cas d'affaissement de ce dernier.

Le canal traversant 14 est mènagé excentré dans la structure annulaire 91.

Le mode de réalisation en deux éléments juxtaposés représenté à la figure 10 se distingue du précédent en ce qu'il ne comporte que les deux projections latérales 92 et 96 et ne comporte pas de troisième projection centrale. Dans ce mode de réalisation, le canal traversant 14 est central.

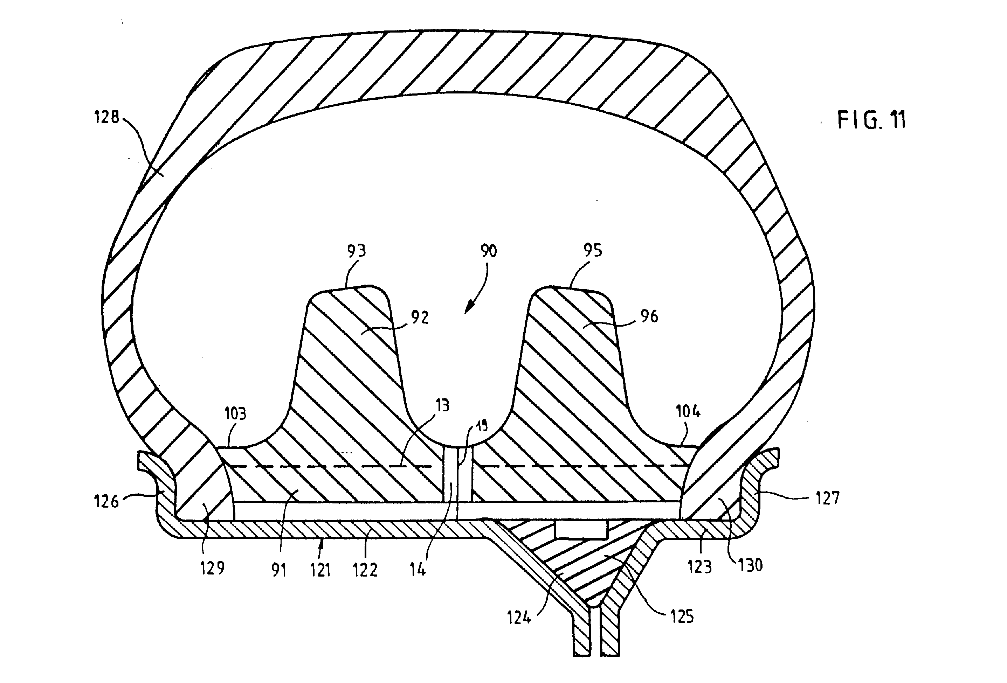

La figure 11 montre l'utilisation du dispositif de verrouillage selon la figure 10 dans une enveloppe de pneu 128 sans chambre, montée sur une jante 121 à fond plat en deux parties 122, 123 à dispositif de compensation 124 équipé d'une cale de compensation 131 en caoutchouc et dans lequel est ménagée une ouverture 125 pour connection avec la valve d'introduction d'air de gonflage. On voit à la figure 11 que les faces supérieures 103, 104 de la bordure périphérique du dispositif de verrouillage sont à une hauteur supérieure à la hauteur des rebords 126, 127 de la jante 121 et que les parois latérales de ladite bordure périphérique compriment les talons 129, 130 du pneu 128 sur la jante 121.

Les segments de division 19 répresentés sur les figures 5, 6, et 9 à 11 indiquent - comme déjà expliqué en rapport aux figures 2 et 4 - que le manchon correspondant est réalisé en plusieurs éléments juxtaposés.

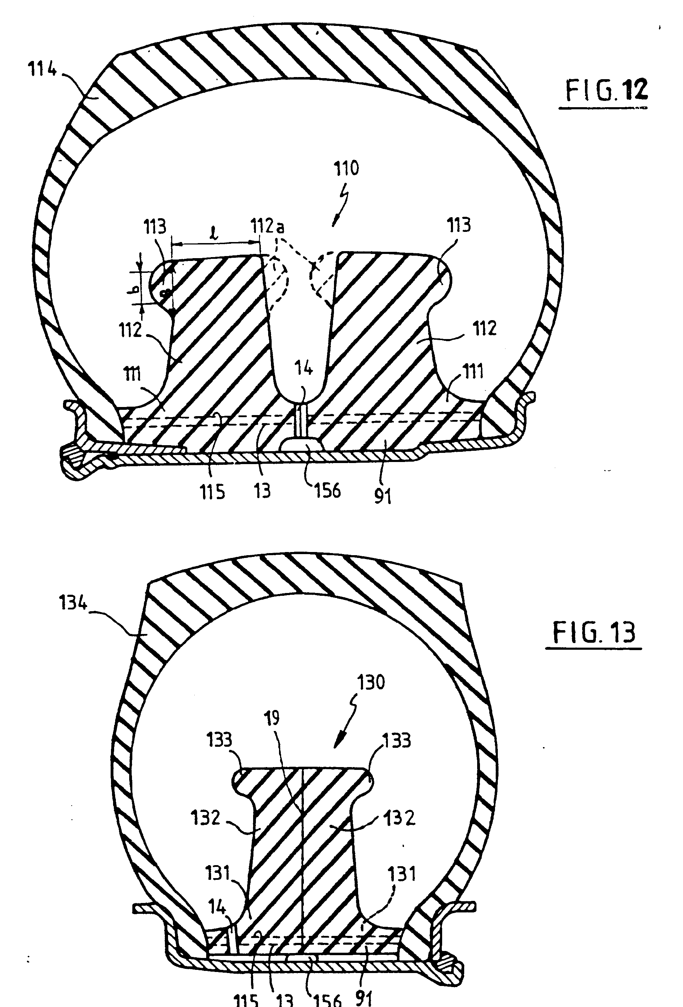

Les figures 12 et 13 montrent un mode de réalisation préféré des extrémités des projections saillantes du manchon composite selon l'invention. A la figure 12 on a représenté un manchon 110 composé de deux parties 111 identiques juxtaposées, chacune pourvue d'une projection saillante 112, respectivement.

Les projections 112 sont espacées l'une de l'autre et présentent un bourrelet annulaire 113, qui est venu de moulage avec ces projections et qui constitue un moyen efficace pour augmenter la surface d'appui du pneu 114 et augmenter ainsi sa longévité sous les contraintes de roulage à plat en cas de crevaison. Bien que ce bourrelet 113 ait été représenté comme bordant le seul côté externe de l'extrémité libre de chaque projection 112, on peut prévoir de le ménager également du côté interne, tel que le bourrelet 112a représenté en pointillé sur la figure 12.

Le manchon élastomère 130 de figure 13 se compose de deux parties identiques 131 chacune pourvue d'une projection saillante 132, tel que le montre le segment 19 et présente lui aussi un bourrelet angulaire 133 sur les deux côtés de son extrémité libre: dans ce cas, il est à noter, par rapport à la figure 12, que les projections 132 saillantes de chaque élément composant le manchon 130 de figure 13, ne sont pas espacées mais en contact mutuel entre elles non seulement par l'intermédiaire de leurs bases mais aussi de leurs faces latérales internes. Cette disposition assure, en cas de crevaison, en coopération avec les deux bourrelets annulaires 133 portés par chaque projection 132, une surface d'appui suffisamment large pour un pneu 134 monté sur une roue présentant une jante relativement étroite.

Il est à noter, aussi, dans chacune des figures 12 et 13, l'emploi de deux armatures annulaires de renforcement 13 et 115, qui sont superposées et noyées dans la base des deux éléments annulaires 111 et 131 qui composent les manchons élastomères 110 et 130, respectivement.

Il va de soi que, bien que les bourrelets d'élargissement de la surface d'appui du pneu en cas de crevaison ont été représentés comme étant ménagés à l'extrémité libre de projections pourvues d'un angle rentrant à la partie supérieure de leurs parois latérales externes, ces bourrelets peuvent être ménagés également sur des projections du type illustré aux figures 1 à 8 - à savoir pourvues d'un angle saillant à la partie supérieure de leurs parois latérales -, y compris les éventuelles projections centrales, lorsque celles-ci sont présentes; en outre, la forme du bourrelet ou des bourrelets portés par une projection peut être différente de la forme du bourrelet ou des bourrelets portés par les autres projections.

De plus, en ce qui concerne les bourrelets situés sur le côté externe de l'extrémité libre des projections les plus externes du dispositif de verrouillage conforme à la présente invention, ils'peuvent avancer au-delà d'une droite verticale imaginaire tracée parallèlement aux axes des projections, à partir de l'extrémité latérale la plus avancée de la structure annulaire de base ou à partir du point le plus saillant de la paroi latérale externe de la projection porteuse du bourrelet extérieur, ou bien ils peuvent s'inscrire à l'intérieur de ladite droite.

Il est avantageux que le bourrelet conforme à la présente invention présente une forme sensiblement trapézoïdale dépourvue d'angles vifs, et il est également avantageux, sans pour cela être limitatif, que ses dimensions soient telles que:

$$B \cong \frac{l}{2} \pm 25\%$$

et

$$b \cong \frac{l}{4} \pm 25\%,$$

où:

- l est la largeur de la face supérieure d'une projection (évidemment mesurée avant de ménager le bourrelet, et
- B est la grande base du trapèze qui forme le bourrelet, et
- b est la petite base de ce trapèze.

La forme et les dimensions indiquées ci-dessus constituent des caractéristiques avantageuses qui permettent de réduire de façon importante l'échauffement susceptible de se produire entre le dispositif de verrouillage et la face intérieure de l'enveloppe du pneu en cas de roulage à plat, et de permettre, par voie de conséquence, une augmentation de la distance de dégagement en roulage à plat, sans pour autant augmenter de façon notable le poids du dispositif de verrouillage.

En effet, les caractéristiques ci-dessus permettent d'abaisser la pression exercée par le fond du pneu sur le sommet des projections, en cas de roulage à plat, au-dessous de 11 kg/cm², ce qui présente un intérêt considérable qui est précisé ci-après: la largeur de la face supérieure des projections est relativement réduite, afin de conférer au dispositif de verrouillage un poids compatible avec les besoins; en cas de roulage à plat, toutefois, le fond du pneu exerce sur le sommet des projections sur lesquelles il vient s'appliquer, une pression qui peut être, en moyenne, de 12 à 15 kg/cm² et qui exerce un effet destructeur sur la couche de butyle interne de l'enveloppe, provoquant un échauffement rapide qui accélère la destruction à la fois du pneu et du dispositif de verrouillage.

La disposition de bourrelets conformes aux dispositions de la présente invention a pour effet de réduire considérablement les sollicitations auxquelles sont soumises les pièces en contact, en cas de roulage à plat, et en particulier de réduire de manière importante la valeur de la pression qui s'exerce, en pareil cas, sur le sommet des projections, et de réduire, par voie de conséquence, de façon considérable, la température des pièces (fond du pneu et sommet des projections) en contact, augmentant d'autant la distance de dégagement.

De plus, la réalisation des bourrelets conformes à la présente invention sans angles vifs, ni arêtes saillantes, évite d'altérer le pneu en cas d'effort axial susceptible de mettre le flanc intérieur du pneu en contact avec la face supérieure des projections et contribue à l'augmentation de la longévité de ce dernier, même en cas de roulage à plat.

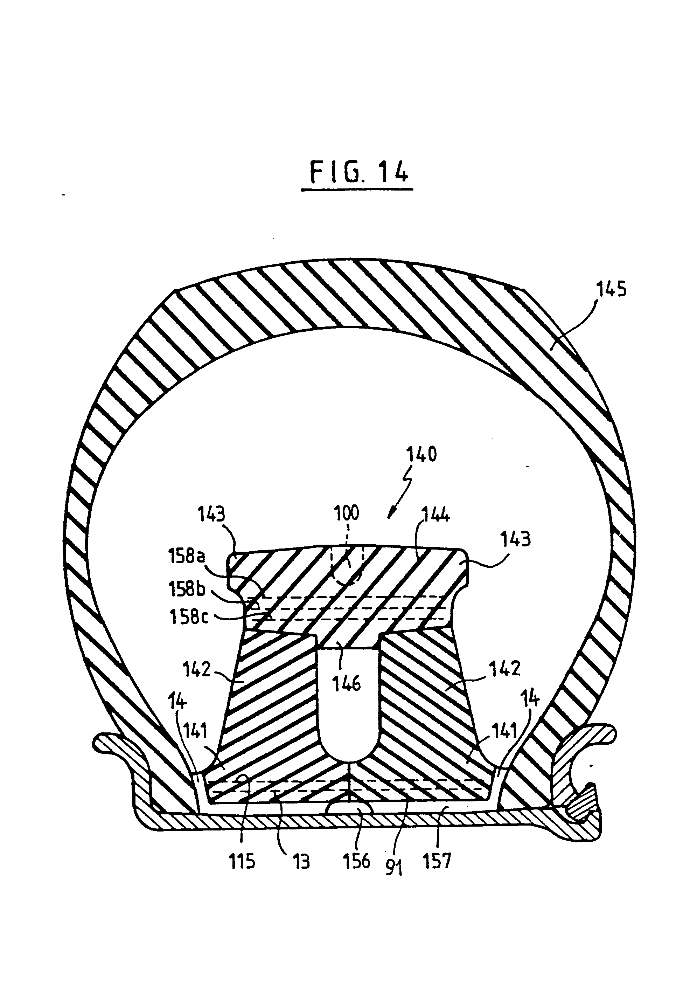

Les figures 14 à 16 montrent le dispositif conforme à l'invention adapté à être monté dans de très gros pneus, dont la profondeur est particulièrement importante. Dans ce cas, la hauteur des éléments juxtaposés qui composent le manchon élastomère serait donc telle que ces éléments présenteraient une rigidité d'ensemble élevée imposant l'emploi d'outils spéciaux pour leur montage dans le pneu.

Pour avoir également dans ce cas les mêmes facilités de montage indiquées plus haut, on réalise le manchon élastomère à l'aide desdits éléments composants annulaires, qui sont destinés à être juxtaposés (et dont la hauteur est choisie de manière à permettre leur montage aisé), et d'un élément annulaire supplémentaire constituant une couronne élastomère qui est superposée aux éléments annulaires de base juxtaposés.

La figure 14 montre un manchon élastomère 140 composé de deux éléments annulaires de base identiques 141, qui sont juxtaposés au niveau de leur base et qui sont pourvus chacun d'une projection 142 - ces deux projections étant espacées en position de montage - et d'une couronne 144 superposée à l'ensemble constitué par les deux éléments 141 et supportée par les deux projections 142.

La face supérieure de ces projections est inclinée vers l'intérieur, à savoir vers la jante et le plan radial médian de cette dernière, de façon à assurer le maintien en position de la couronne 144: à cet effet, les portions latérales de la face inférieure de cette couronne - à savoir de la face délimitant son ouverture centrale - qui correspondent aux faces supérieures des projections 142 sont elles aussi inclinées légèrement, par rapport à l'horizontale, d'un angle aigu qui de préférence est inférieur à 10°, et sont dirigées vers la jante et ledit plan radial médian en s'adaptant à la pente des faces supérieures des projections 142, tandis que la portion centrale de cette couronne présente une projection 146 faisant saillie vers la jante et destinée à pénétrer dans l'espace compris entre lesdites projections 142.

Ces projections 142 constituent pour la projection 146, et donc pour la couronne 144, deux butées latérales qui empêchent la couronne d'abandonner sa position lorsque le pneu 145 est soumis, pendant le roulement à plat, à das efforts latéraux, notamment dus aux forces centrifuges agissant sur un véhicule automobile et transmises à ses roues sur un parcours curviligne.

Le maintien en position de la couronne 144 est assuré également par serrage de cette dernière contre les éléments annulaires de base juxtaposés qui la supportent: à cet effet, le diamètre interne de la couronne, évalué au niveau des portions latérales de sa face inférieure qui viennent en appui contre les faces inclinées des projections 142, est sensiblement inférieur au diamètre externe correspondant à ces projections.

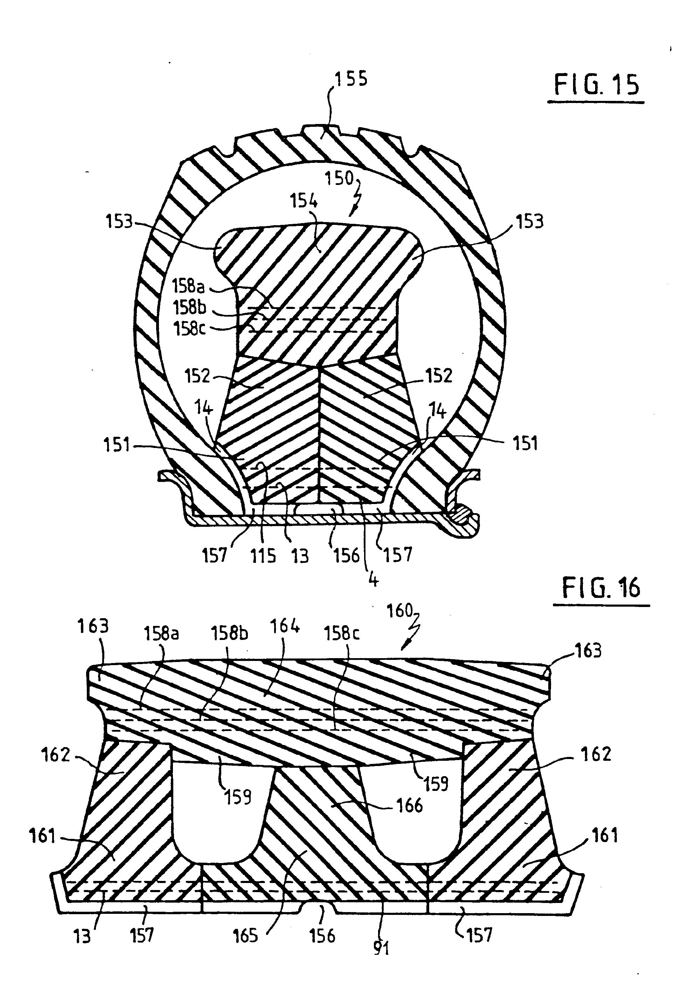

La figure 15 diffère de la figure 14 en ce que les deux éléments. annulaires identiques juxtaposés 151, dont se compose le manchon 150 et qui sont chacun pourvus d'une projection saillante 152, sont en contact l'un avec l'autre sur toute leur hauteur, à savoir non seulement au niveau de leur base mais aussi des faces latérales internes de leurs projections 152.

La structure de base du manchon 150, supportant la couronne 154, ne présente donc qu'une projection unique et elle s'applique plus particulièrement aux roues pour pneus relativement gros et à jante relativement étroite.

Les projections 152 présentent elles aussi leurs faces supérieures inclinées légèrement vers la jante et vers le plan radial médian de la jante, lesquelles faces se touchent suivant une ligne centrale, en sorte que la face inférieure de la couronne 154 et en forme de V saillant.

Donc, la couronne 154 dans la disposition de figure 15 ne comporte pas à sa face inférieure de projection centrale faisant butée et elle est adaptée au cas où il n'y a pas à craindre l'action d'efforts latéraux centrifuges sur le pneu 155 (c'est le cas des roues de métro qui se déplacent suivant des guides latéraux capables d'encaisser ces efforts dans les virages).

Dans chacune des représentations illustrées aux figures 14 et 15, chacun des éléments annulaires de base juxtaposés 141 et 151, respectivement, comporte deux armatures annulaires de renforcement 13 et 115 superposées et noyées dans leurs bases, tandis que les couronnes correspondantes 144 et 154 comportent trois armatures annulaires 158a, 158b et 158c également superposées et noyées dans la base de ces couronnes.

En outre, on retrouve dans chaque cas également des bourrelets annulaires, dénotés par les références 143 et 153 qui, au lieu d'être ménagés sur les côtés externes des extrémités des projections saillantes respectives 142 et 152, sont ménagés sur les côtés externes de l'extrémité libre des deux couronnes 144 et 154.

Il peut être en outre avantageux de ménager au moins un évidement d'allègement, notamment annulaire, dans la couronne, tel que l'évidement 100 délimité par une ligne en pointillé sur la figure 14.

Il est à noter que dans les réalisations illustrées aux figures 14 et 15, le gonflage du pneu se fait nécessairement à travers une pluralité de canaux axiaux tels que 157, débouchant latéralement suivant des canaux 14 sensiblement au niveau de la partie supérieure des talons, ces canaux axiaux étant en communication avec un canal prinicpal central 156 constitué par juxtaposition des éléments de base 151 et 141, respectivement.

La figure 16 diffère, par rapport à la figure 14, en ce que le manchon 160 se compose de trois éléments juxtaposés symétriques par rapport audit plan radial médian de la jante, dont les deux éléments 161 sont latéraux et l'élément 165 est central.

Les éléments 161 et 165 sont pourvus des projections saillantes 162 et 166, respectivement, sur lesquelles prend appui une couronne 164.

Les éléments 161 sont similaires aux éléments 141 de la figure 14, à savoir que leurs projections 162 présentent les faces supérieures inclinées légèrement vers la jante'et vers ledit plan radial médian, tandis que l'élément 165 présente une projection 166 dont la surface supérieure est horizontale.

De part et d'autre par rapport a la projection 166, la couronne 164 présente des projections 159 faisant butée, dont la face inférieure est légèrement inclinée, comme les faces supérieures des projections latérales 162 du manchon 160, et qui s'emboîtent suivant les faces latérales interne de ces projections 162.

On retrouve également dans l'exemple de la figure 16 les bourrelets annulaires, dénotés par la référence 163, sur les côtés de la couronne 164, les armature: 158a, 158b, 158c de renforcement de cette couronne et les armatures 13, 115 de renforcement des éléments juxtaposés supportant ladite couronne, de même que les canaux de gonflage 156, 157 et 14.

Il est avantageux de réaliser, d'une part, les éléments juxtaposés de support de ladite couronne en élastomère dont la dureté se situe de préférence entre 75 et 85 Shore A et, d'autre part, la couronne avec une dureté moindre, de préférence située entre 70 et 77 Shore A.

Le dispositif de verrouillage conforme à la présente invention fonctionne, de même que les dispositifs de verrouillage connus dans l'Art antérieur, avec un lubrifiant présent dans l'enveloppe pour réduire l'échauffement provoqué par le frottement entre ledit dispositif de verrouillage et la face intérieure, ou fond, du pneu.

L'on obtient, conformément à l'invention, un dispositif de verrouillage à usages multiples qui répond notamment aux critères suivants:

- possibilité de réaliser un dispositif de verrouillage relativement léger pour ne pas surcharger la suspension et relativement peu consommateur de matière, et donc moins coûteux que les dispositifs proposés dans l'Art antérieur;
- simplicité de fabrication avec des machines ne requérant pas de gros investissements et déterminant des économies de matière, d'où son prix de revient très inférieur à ceux des dispositifs de sécurité proposés sur le marché à ce jour;
- facilité de montage, à la main ou avec une simple sangle à cliquet;
- possibilité d'adapter le dispositif de verrouillage aux besoins, en ce qu'un dispositif comportant des projections de hauteur relativement faible par rapport à la structure annulaire, permet le dégagement, ou la fuite, sur une distance relativement faible, de l'ordre de 5 à 10 km, par exemple, qui présente de l'intérêt comparativement à sa légèreté et à son bas prix de revient, et en ce qu'un dispositif pourvu de projections de hauteur relativement importante par rapport à la structure annulaire, permet un roulage à plat sur une distance notablement plus grande, qui peut être de l'ordre de 25 km et plus jusqu'à 50 km;

en particulier, les dispositifs de verrouillage, comportant des projections de hauteur relativement faible, sont particulièrement adaptés au marché des véhicules de transfert de fonds, qui doit pouvoir disposer de pneus à dispositif de sauvegarde, relativement léger, peu coûteux et suffisant pour permettre, en cas d'incident ou d'accident, le dégagement du véhicule pour le mettre en sûreté. En effet, le manchon conforme à la présente invention permet le déplacement du véhicule à des pressions de gonflage très basses avant que la face opposée 43 du pneu 30 n'entre en contact avec les projections saillantes. Selon le type de pneu utilisé, la pression interne du pneu peut être aussi faible que 0,4 bar de pression manométrique avant que la face opposée 43 n'entre en contact avec les projections saillantes. Comme les caractéristiques de fonctionnement sont améliorées lorsqu'un tel contact est évité, l'aptitude à éviter un tel contact à des pressions de roulage aussi basses, procure un avantage supplémentaire.

Chacun des modes de réalisation du manchon conforme à la présente invention peut être réalisé en deux, trois ou plusieurs éléments. Le manchons peuvent être utilisés avec une jante plate ou avec une jante à base creuse et ils peuvent être utilisés avec des pneus sans chambre ou avec des pneus à chambre. Chaque manchon peut être utilisé avec un système central de gonflage de pneus. Les projections saillantes peuvent être de différentes hauteurs.

## Revendications

1. Dispositif de verrouillage à fonctions multiples pour le montage d'une enveloppe de pneumatique ou pneu (114; 128; 134) sur une roue du type démontable comprenant une jante qui comporte deux rebords (33;34; 126,127) opposés en contact avec deux talons (129;130) correspondants dudit pneu et un manchon annulaire (1;45;90;110;130) encerclant la jante et comportant :

- au moins une ouverture pour permettre le passage de l'air de gonflage ;
- une dimension horizontale, au niveau de sa base, qui est sensiblement supérieure à l'intervalle intérieur qui sépare les talons dudit pneu ;
- une structure annulaire de base (4;91) à partir de laquelle fait saillie au moins une projection (5,6; 92; 96; 112 ; 132;) de support de la bande de roulement du pneu, en cas de crevaison, qui est orientée en direction de la face interne du pneu opposée à la jante ;
- au moins une armature de renforcement (13, 115), annulaire et continue, qui est capable de rendre le manchon inextensible à l'emplacement de ladite armature, le manchon présentant, avant son montage sur la jante, un diamètre intérieure sensiblement égal au diamètre extérieur du fond de la jante caractérisé en ce que :

    - l'armature de renforcement est réalisée sous forme de couche ou de nappe, notamment de câblé ou de tissu textile ou de câblé métallique, et s'étend sensiblement sur toute la largeur de ladite structure annulaire et est périphérique, à savoir disposée à la partie radialement extérieure de celle-ci pour conserver constant le diamètre correspondant à son emplacement ;
    - le manchon se compose d'une pluralité d'éléments annulaires continus et distincts, qui sont juxtaposés axialement et qui comprennent chacun une partie de ladite structure annulaire de base, de manière à constituer conjointement une structure annulaire unique, et au moins une projection.

2. Dispositif selon la revendication 1, caractérisé en ce que le manchon se compose de deux éléments annulaires (111, 142, 152) distincts et juxtaposés comprenant chacun au moins une projection (112, 142, 152) saillante.

3. Dispositif selon la revendication 2, caractérisé en ce que les deux éléments (111, 142) sont juxtaposés exclusivement au niveau de la structure annulaire de base (91), les faces latérales internes des deux projections saillantes les plus internes (112, 142) de chaque élément étant espacées l'une de l'autre.

4. Dispositif selon la revendication 3, caractérisé en ce que les deux éléments juxtaposés (11, 142) sont symétriques par'rapport au plan radial médian de la jante et comportent chacun une seule projection (112, 142).

5. Dispositif selon la revendication 4, caractérisé en ce que les faces supérieures des deux projections sont horizontales.

6. Dispositif selon la revendication 4, caractérisé en ce que les faces supérieures des deux projections (112) sont inclinées vers l'extérieur.

7. Dispositif selon la revendication 4, caractérisé en ce que les faces supérieures des deux projections (142) sont inclinées vers l'intérieur du pneu, à savoir vers ledit plan radial médian et vers la jante.

8. Dispositif selon la revendication 2, caractérisé en ce que les deux éléments (151) sont juxtaposés sur toute leur hauteur, à savoir au niveau de la structure annulaire de base (4) et des faces latérales internes des deux projections saillantes les plus internes (152), ces dernières projections juxtaposées constituant ainsi les deux parties d'une projection unique centrale.

9. Dispositif selon la revendication 8, caractérisé en ce que les deux éléments juxtaposés (151) sont symétriques par rapport au plan radial médian de la jante et comportent chacun une projection (152), les deux projections ainsi juxtaposées constituant toujours les deux parties d'une projection unique centrale.

10. Dispositif selon la revendication 9, caractérisé en ce que les faces supérieures des deux parties juxtaposées de ladite projection unique centrale sont horizontales.

11. Dispositif selon la revendication 9, caractérisé en ce que les faces supérieures des deux parties juxtaposées de ladite projection unique centrale sont dirigées vers la face interne du pneu et convergent dans le plan radial médian du pneu de manière que la face supérieure de ladite projection unique centrale est en forme de V à angle saillant et à grande ouverture, avec sommet arrondi.

12. Dispositif selon la revendication 9, caractérisé en ce que les faces supérieures des deux parties juxtaposées (152) de ladite projection unique centrale sont dirigées vers le fond de la jante et convergent dans le plan radial médian du pneu, de manière que la face supérieure de cette projection unique centrale est en forme de V à angle rentrant et à grande ouverture.

13. Dispositif selon la revendication 1, caractérisé en ce que le manchon (1, 160) se compose de trois éléments annulaires distincts et juxtaposés, à savoir de deux éléments latéraux et d'un élément central qui sépare ces deux éléments latéraux.

14. Dispositif selon la revendication 13, caractérisé en ce que l'élément central est interchangeable, en fonction des différentes largeurs de jantes.

15. Dispositif selon l'une quelconque des revendications 13 et 14, caractérisé en ce que les deux éléments latéraux sont pourvus chacun d'au moins une projection saillante.

16. Dispositif selon l'une quelconque des revendications 13 et 14, caractérisé en ce que les deux éléments latéraux ainsi que l'élément central sont pourvus chacun d'au moins une projection saillante, lesquelles projections sont espacées l'une de l'autre.

17. Dispositif selon l'une quelconque des revendications 13 et 14, caractérisé en ce que les deux éléments latéraux (161) ainsi que l'élément central (165) sont symétriques par rapport au plan radial médian de la jante et chaque élément comporte une seule projection (162, 166).

18. Dispositif selon la revendication 17, caractérisé en ce que les faces supérieures des deux projections latérales et de la projection centrale sont horizontales.

19. Dispositif selon la revendication 17, caractérisé en ce que les faces supérieures des deux projections latérales sont inclinées vers l'extérieur, tandis que la face supérieure de la projection centrale est horizontale.

20. Dispositif selon la revendication 17, caractérisé en ce que les faces supérieures des deux projections latérales (162) sont inclinées vers l'intérieur, a savoir vers ledit plan radial médian et vers la jante, tandis que la face supérieure de la projection centrale (166) est horizontale.

21. Dispositif selon l'une quelconque des revendications 2, 3, 4, 7 ou 13, 15, 16, 17, 20, caractérisé en ce que le manchon (140, 160) comporte un élément annulaire continu supplémentaire (144, 164) qui est superposé auxdits (deux ou trois) éléments juxtaposés (141; 161 et 165), lequel élément superposé (144, 164) présente sa face inférieure, qui regarde vers la jante, conformée de manière à s'adapter aux faces supérieures des différentes projections (142; 162 et 166) du manchon sur lesquelles il vient en appui.

22. Dispositif selon l'une quelconque des revendications 8, 9 et 12, caractérisé en ce que le manchon (150) comporte un élément annulaire continu supplémentaire (154) qui est superposé auxdits deux éléments (151) juxtaposés sur toute leur hauteur et qui présente sa face inférieure, à savoir la face qui regarde vers la jante, en forme de V saillant s'adaptant au V rentrant de ladite projection unique centrale en deux parties du manchon.

23. Dispositif selon l'une quelconque des revendications 21 et 22, caractérisé en ce que les dimensions internes que l'élément superposé (144, 154, 164) présente au niveau des portions de sa face inférieure qui viennent en appui sur les projections correspondantes (142; 152; 162 et 166) des éléments distincts juxtaposés (141; 151; 161 et 165), sont sensiblement inférieures aux dimensions d'encombrement radial de ces projections, de manière que l'élément superposé est appliqué par serrage autour desdits éléments distincts juxtaposés.

24. Dispositif selon l'une quelconque des revendications 21 et 22, caractérisé en ce qu'également ledit élément superposé (144, 154, 164) comporte au moins une armature de renforcement (158a, 158b, 158c) annulaire, sous forme de couche ou de nappe, qui est noyée dans sa base et est destinée à rendre cet élément superposé inextensible.

25. Dispositif selon la revendication 21, caractérisé en ce que la face inférieure de l'élément superposé (144, 164) présente, entre deux projections contiguës (142; 162 et 166) une portion en saillie (146, 159), dirigée vers la jante, qui est destinée à constituer une butée permettant à l'élément superposé de conserver sa position en cas de roulage à plat du pneu, et ce également sous l'effet d'efforts axiaux centrifuges agissant sur le pneu.

26. Disposition selon l'une quelconque des revendications 21 et 22, caractérisé en ce que ledit élément superposé (140) comporte au moins un évidement d'allègement (100), notamment annulaire et ménagé à sa partie supérieure.

27. Dispositif selon l'une quelconque des revendications 1 à 20, caractérisé en ce qu'au moins les projections les plus externes desdits éléments juxtaposés (111) sont pourvues d'un bourrelet (133, 113, 112a) à leur extrémité libre.

28. Dispositif selon l'une quelconque des revendications 21 à 26, caractérisé en ce que ledit élément (144, 154, 164) superposé auxdits éléments juxtaposés (141, 151, 161) est pourvu d'un bourrelet (143, 153, 163) à son extrémité libre.

29. Dispositif selon l'une quelconque des revendications 27 et 28, caractérisé en ce que ledit bourrelet (113, 133, 143, 153, 163) est annulaire et continu, à savoir qu'il entoure la totalité de la périphérie de ladite extrémité libre.

30. Dispositif selon l'une quelconque des revendications 27 et 28, caractérisé en ce que ledit bourrelet annulaire (113) est prévu pour border au moins le côté externe de l'extrémité libre d'au moins les projections les plus externes desdits éléments juxtaposés ou, en alternative, les deux côtés - nécessairement externes - de l'extrémité libre dudit élément superposé, lorsque celui-ci est présent.

31. Dispositif selon l'une quelconque des revendications 27 et 28, caractérisé en ce que ledit bourrelet est dépourvu d'angles vifs.

32. Dispositif selon l'une quelconque des revendications 27 et 28, caractérisé en ce que ledit bourrelet présente une forme sensiblement trapézoïdale.

33. Dispositif selon la revendication 32, caractérisé en ce que, dans le cas où ledit bourrelet borde lesdites projections, ce bourrelet présente sensiblement la forme d'un tapèze rectangle dont les dimensions sont telles que:

$$B = \frac{l}{2} \pm 25\%$$

et

$$b = \frac{l}{4} \pm 25\%,$$

où

- l est la largeur de la face supérieure de la projection ou des projections concernées,
- B est la grande base du trapèze qui forme le bourrelet, et
- b est la petite base du trapèze qui forme ce bourrelet.

34. Dispositif selon l'une quelconque des revendications 1 à 33, destiné à être monté sur une jante de pneu à base creuse démontable comportant deux rebords opposés en contact avec les talons du pneu, caractérisé en ce que les deux rebords de la jante comprennent chacun une section inclinée sur l'horizontale et une section de support arquée, la section inclinée s'étendant à partir de la partie interne de la jante en direction de l'extérieur suivant un angle inférieur à 45° par rapport à l'horizontale et se terminant en une section de support arquée, lequel dispositif est en outre caractérisé en ce que les parties intérieures des talons sont supportées par les sections inclinées des rebords et les sections de support arquées de ces rebords sont en contact avec les faces extérieures des talons du pneu.

35. Dispositif selon la revendication 34, caractérisé en ce que des supports annulaires disposés entre la jante et le diamètre intérieur du manchon sont prévus pour procurer une surface cylindrique à proximité du diamètre intérieur du manchon, ce support annulaire comportant un profilé en caoutchouc en contact avec la jante et avec le diamètre intérieur du manchon.

**Patentansprüche**

1. Vorrichtung zum Festspannen, mit Mehrfachfunktionen, für die Montage eine Luftreifenhülle oder eines Luftreifens bzw. Pneus (114; 128; 134) auf einem Rad, vom demontierbaren Typ, mit einer Felge, die zwei sich gegenüberstehende Ränder (33, 34, 126, 127) in Kontakt mit zwei entsprechenden Wülsten (129/130) des Lufreifens sowie eine ringförmige Hülle (1; 45; 90; 110; 130), die die Felge umschließt, umfaßt, und umfassend:
   - wenigstens eine Öffnung für den Durchgang der Aufblasluft;
   - eine horizontale Abmessung in Höhe ihrer Basis, die im wesentlichen größer als das innere Intervall, das die beiden Absätze des Luftreifens trennt, ist;
   - eine Basisringkonstruktion (4; 91), ausgehend von der wenigstens ein Vorsprung (5; 6; 92; 96; 112; 132) zum Abstützen der Lauffläche des Luftreifens im Falle des Platzens aufweist, der in Richtung der Innenfläche des Luftreifens der Felge gegenüber gerichtet ist;
   - wenigstens eine Verstärkungsbewehrung (13, 115), die ringförmig und kontinuierlich und in der Lage ist, die Hülle am Ort der Bewehrung nicht - dehnbar zu machen, wobei die Hülle vor ihrer Montage auf der Felge einen Innendurchmesser im wesentlichen gleich dem Außendurchmesser des Bodens der Felge aufweist,
      dadruch gekennzeichnet, daß:
   - die Verstärkungsbewehrung in Form einer Schicht oder Bahn, insbesondere aus Kord oder Textilgewebe oder metallischem Kord hergestellt ist und sich im wesentlichen über die gesamte Breite der Ringkonstruktion erstreckt und peripher ist, d.h. am radial äußeren Teil hiervon angeordnet ist, um entsprechend ihrem Ort den Durchmesser konstant zu halten;
   - die Hülle sich aus einer Vielzahl kontinuierlicher und unterschiedlicher Ringelemente zusammensetzt, die axial nebeneinander angeordnet sind und je einen Teil dieser Ringbasiskonstruktion derart umfassen, daß gemeinsam eine einzige Ringkonstruktion bzw. Ringstruktur und wenigstens ein Vorsprung gebildet werden.

2. Vorrichtung nach Anspruch 1, dadurch **gekennzeichnet**, daß die Ringausbildung sich aus zwsei ringförmigen Elementen (111, 142, 152), die unterschiedlich nebeneinander angeordnet sind, zusammensetzt und je wenigstens einen vorkragenden Vorsprung(112, 142, 152) aufweist.

3. Vorrichtung nach Anspruch 2, dadurch **gekennzeichnet,** daß die beiden Elemente (111, 142) ausschließlich in Höhe der Ringbasiskonstruktion (91) nebeneinander angeordnet sind, wobei die Seiteninnenflächen der beiden nach innen am weitesten vorkragenden Vorsprünge (112, 142) jedes Elementes unter Abstand zueinander angeordnet sind.

4. Vorrichtung nach Anspruch 3, dadurch **gekennzeichnet**, daß die beiden nebeneinander angeordneten Elemente (11, 142) symmetrisch bezüglich der radialen Mittelebene der Felge sind und je einen einzigen Vorsprung (112, 142) umfassen.

5. Vorrichtung nach Anspruch 4, dadurch **gekennzeichnet,** daß die Oberseiten der beiden Vorsprünge horizontal ausgebildet sind.

6. Vorrichtung nach Anspruch 4, dadurch **gekennzeichnet,** daß die Oberseiten der beiden Vorsprünge (112) nach außen geneigt sind.

7. Vorrichtung nach Anspruch 4, dadurch **gekennzeichnet,** daß die Oberseiten der beiden Vorsprünge (142) bezüglich des Reifens nach innen, d.h. gegen diese Radialmittelebene und gegen die Felge geneigt sind.

8. Vorrichtung nach Anspruch 2, dadurch **gekennzeichnet,** daß die beiden Elemtente (151) über ihre gesamte Höhe nebeneinander, nämlich in Höhe der Ringbasiskonstruktion (4) und der Innenseitenflächen der beiden am weitesten nach innen vorkragenden Vorsprünge (152) angeordnet sind, wobei letztgenannte nebeneinander angeordnete Vorsprünge so die beiden Teile eines einziger mittigen Vorsprungs bilden.

9. Vorrichtung nach Anspruch 8, dadurch **gekennzeichnet,** daß die beiden nebeneinander angeordneten Elemente (151) symmetrisch zur Radialmittelebene der Felge sind und je einen Vorsprung (152) umfassen, wobei die so nebeneinander angeordneten Vorsprünge immer die beiden Teile eines einzigen mittigen Vorsprungs darstellen.

10. Vorrichtung nach Anspruch 9, dadurch **gekennzeichnet,** daß die Oberseiten der beiden nebeneinander angeordneten Teile dieses einzigen mittigen Vorsprungs horizontal sind.

11. Vorrichtung nach Anspruch 9, dadurch **gekennzeichnet,** daß die Oberseiten der beiden nebeneinander angeordneten Teile dieses einzigen mittigen Vorsprungs gegen die Innenfläche des Luftreifens gerichtet und konvergent in einer Radialmittelebene des Luftreifens derart sind, daß die Oberseite dieses einzigen mittigen Vorsprungs in Form eines V mit vorstehendem Winkel und großer Öffnung bei abgerundetem Winkelkopf ausgebildet ist.

12. Vorrichtung nach Anspruch 9, dadurch **gekennzeichnet,** daß die Oberseiten der beiden nebeneinander angeordneten Teile (152) dieses einzigen mittigen Vorsprungs gegen den Boden der Felge gerichtet sind und konvergent in der Radialmittelebene des Luftreifens derart sind, daß die Oberseite dieses einzigen mittigen Vorsprungs in Form eines V mit einspringendem Winkel und großer Öffnung vorliegt.

13. Vorrichtung nach Anspruch 1, dadurch **gekennzeichnet,** daß die Ringausbildung (1, 160) sich aus drei ringförmigen unterschiedlichen und neneneinander befindlichen Elementen, nämlich zwei seitlichen Elementen und einem mittigen Element sich zusammensetzt, welches diese beiden seitlichen Elemente trennt.

14. Vorrichtung nach Anspruch 13, dadurch **gekennzeichnet,** daß das zentrale Element als Funktion der unterschiedlichen Felgenbreiten auswechselbar ist.

15. Vorrichtung nach einem der Ansprüche 13 und 14, dadurch **gekennzeichnet**, daß die beiden seitlichen Elemente jeweils mit einem auskragenden Vorsprung versehen sind.

16. Vorrichtung nach einem der Ansprüche 13 und 14, dadurch **gekennzeichnet,** daß die beiden seitlichen Elemente sowie das mittige Element je mit wenigstens einem vorkragenden Vorsprung versehen sind, wobei diese Vorsprünge unter Abstand voneinander angeordnet sind

17. Vorrichtung nach einem der Ansprüche 13 und 14, dadurch **gekennzeichnet,** daß die beiden seitlichen Elemente (161) sowie das mittige Element (165) symmetrisch bezüglich der Radialmittelebene der Felge sind und jedes Element einen einzigen Vorsprung (162, 166) umfaßt.

18. Vorrichtung nach Anspruch 17, dadurch **gekennzeichnet,** daß die Oberseiten der beiden seitlichen Vorsprünge und des mittigen Vorsprungs horizontal sind.

19. Vorrichtung nach Anspruch 17, dadurch **gekennzeichnet,** daß die Oberseiten der beiden seitlichen Vorsprünge nach außen geneigt sind, während die Oberseite des mittigen Vorsprungs horizontal ist.

20. Vorrichtung nach Anspruch 17, dadurch **gekennzeichnet**, daß die Oberseiten der beiden seitlichen Vorsprünge (162) nach innen, nämlich gegen diese Radialmittelebene und gegen die Felge geneigt sind, während die Oberseite des mittigen Vorsprungs (166) horizontal ausgebildet ist.

21. Vorrichtung nach einem der Ansprüche 2, 3, 4, 7 oder 13, 15, 16, 17, 20, dadurch **gekennzeichnet,** daß die Ringausbildung (140, 160) ein kontinuierliches zusätzliches Ringelement (144, 164) umfaßt, welches diesen (zwei oder drei) nebeneinander angeordneten Elementen (141; 161 und 165) überlagert ist, wobei dieses überlagerte Element (144, 164) hinsichtlich seiner Unterseite, die gegen die Felge weist, derart ausgestaltet ist, daß es sich den Oberseiten der verschiedenen Vorsprünge (142; 162 und 166) der Ringausbildung, auf welchen sie sich abstützt, anpaßt.

22. Vorrichtung nach einem der Ansprüche 8, 9 und 12, dadurch **gekennzeichnet**, daß die Ringausbildung (150) ein kontinuierliches zusätzliches Ringelement (154) umfaßt, welches diesen nebeneinander angeordneten Elementen (151) über deren gesamte Höhe überlagert ist und seine Unterseite, nämlich die gegen die Felge weisende Seite in Form eines vorkragenden V ausgebildet hat, daß sich dem einspringenden V dieses einzigen mittigen Vorsprungs aus zwei Teilen der Ringausbildung anpaßt.

23. Vorrichtung nach einem der Ansprüche 21 und 22, dadurch **gekennzeichnet**, daß die Innenabmessungen, die das überlagerte Element (144, 154, 164) in Höhe der Teile seiner Unterseite aufweist, die in Abstützung auf die entsprechenden Vorsprünge (142; 152; 162 und 166) der unterschiedlich nebeneinander angeordneten Elemente (141; 151; 161 und 165) kommen, im wesentlichen kleiner als die Abmessungen des radialen Platzbedarfs dieser Vorsprünge sind, derart, daß das überlagerte Element durch Spannen um diese unterschliedlichen nebeneinander angeordneten Elemente angepreßt wird.

24. Vorrichtung nach einem der Ansprüche 21 und 22, dadurch **gekennzeichnet,** daß das überlagerte Element (144, 154, 164) wenigstens eine Verstärkungsbewehrung (158a, 158b, 158c) ringförmige Gestalt in Form einer Schicht oder Bahn aufweist, die in der Basis eingebettet und dazu bestimmt ist, dieses überlagerte Element nicht-dehnbar zu machen.

25. Vorrichtung nach Anspruch 21, dadurch **gekennzeichnet,** daß die Unterseite des überlagerten Elements (144, 164) zwischen zwei aneinander angrenzenden Vorsprüngen (142; 162 und 166) einen vorkragenden Teil (146, 159) aufweist, der gegen die Felge gerichtet ist und der dazu bestimmt ist, einen Anschlag zu bilden, der es dem überlagerten Element erlaubt, seine Position im Falle eines Abrollens im flachen Zustand beizubehalten und dies ebenfalls unter dem Einfluß auf den Luftreifen wirkender Zentrifugalkräfte.

26. Vorrichtung nach einem der Ansprüche 21 und 22, dadurch **gekennzeichnet,** daß das überlagerte Element (140) wenigstens eine der Leichtbauweise dienende Ausnehmung (100) insbesondere ringförmiger Gesralt, die an der Oberseite angeordnet ist, aufweist.

27. Vorrichtung nach einem der Ansprüche 1 bis 20, dadurch **gekennzeichnet,** daß wenigstens die am weitesten außen befindlichen Vorsprünge dieser nebeneinander angeordneten Elemente (111) mit einem Wulst (133, 113, 112a) an ihrem freien Ende versehen sind.

28. Vorrichtung nach einem der Ansprüche 21 bis 26, dadurch **gekennzeichnet,** daß dieses den nebeneinander angeordneten Elementen (141, 151, 161) überlagerte Element (144, 154, 164) mit einem Wulst (143, 153, 163) an seinem freien Ende versehen ist.

29. Vorrichtung nach einem der Ansprüche 27 und 28, dadurch **gekennzeichnet,** daß der Wulst (113, 133 143, 153, 163) ringförmig und kontinuierlich ist, daß er nämlich die Gesamtheit des Umfangs dieses freien Endes umgibt.

30. Vorrichtung nach einem der Ansprüche 27 und 28, dadurch **gekennzeichnet,** daß der Ringwulst (113) vorgesehen ist, um wenigstens die Außenseite des freien Endes wenigstens einer der am weitesten außen befindlichen Vorsprünge dieser nebeneinander angeordneten Elemente zu begrenzen oder alternativ die beiden notwendigerweise außen befindlichen Seiten des freien Endes dieses gegebenenfalls vorhandenen überlagernden Elementes.

31. Vorrichtung nach einem der Ansprüche 27 und 28, dadurch **gekennzeichnet,** daß dieser Wulst ohne spitze Winkel ausgebildet ist.

32. Vorrichtung nach einem der Ansprüche 27 und 28, dadurch **gekennzeichnet,** daß dieser Wulst eine im wesentlichen trapezförmige Gestalt aufweist.

33. Vorrichtung nach Anspruch 32, dadurch **gekennzeichnet,** daß für den fall, daß der Wulst diese Vorsprünge begrenzt, dieser Wulst im wesentlichen die Form eines rechtwinkligen Trapezes annimmt, dessen Abmessungen derart sind, daß

$$B = \frac{l}{2} \pm 25\,\%$$

und

$$b = \frac{l}{4} \pm 25\,\%$$

wo

- I die Breite der Oberseite des Vorsprungs oder der betrachten Vorsprünge ist, und
- B die Basis des den Wulst bildenden Trapezes und
- b die kleine Basis des diesen Wulst bildenden Trapezes ist.

34. Vorrichtung nach einem der Ansprüche 1 bis 33, dazu bestimmt, auf einer Luftreifenfelge mit hohler Basis vom demontierbaren Typ montiert zu werden mit zwei sich gegenünerliegenden mit den Luftreifenwülsten in Kontakt stehenden Schultern, dadurch **gekennzeichnet,** daß die beiden Felgenschultern je einen gegen die Horizontale geneigten Abschnitt und einen gewölbten Trägerabschnitt aufweisen, wobei der gewölbte Abschnitt ausgehend vom Innenteil der Felge in Richtung nach außen entsprechend einem Winkel von weniger als 45° bezogen auf die Horizontale sich erstreckt und in einen gewölbten Trägerabschnitt endet, wobei die Vorrichtung sich weiterhin dadurch kennzeichnet, daß die Innenteile der Wülste von den geneigten Abschnitten der Schultern abgestützt sind und die gewölbten Trägerabschnitte dieser Schultern in Kontakt mit den Außenflächen der Luftreifenwülste stehen.

35. Vorrichtung nach Anspruch 34, dadurch **gekennzeichnet,** daß die ringförmigen, zwischen Felge und Innendurchmesser der Ringausbildung angeordneten ringförmigen Stützen vorgesehen sind, um eine zylindrische fläche benachbart dem Innendurchmesser der Ringausbildung zu bieten, wobei der Ringträger ein Gummiprofil in Kontakt mit der Felge und mit dem Innendurchmesser der Ringausbildung aufweist.

**Claims**

1. A multi-purpose locking device for fitting a tyre casing (114, 128, 134) on to a demountable-type wheel, comprising:

     a rim having two opposite flanges (33, 34; 126, 127) in contact with two corresponding beads (129/130) of the tyre, and

     an annular sleeve (1; 45, 90, 110; 130) encircling the rim and having:

     . at least one opening for inflation air,

     . a horizontal dimension, at the level of its base, which is substantially greater than the internal space between the tyre beads;

     . an annular base structure (4; 91) from which at least one projection (5, 6, 92; 96/112; 132) extends for bearing the tyre tread in the event of a puncture and is disposed in the direction of the inner surface of the tyre remote from the rim;

     . at least one continuous annular reinforcing frame (13, 115) capable of making the sleeve non-stretchable at the position of the frame, the sleeve, before being fitted on to the rim, having an internal diameter substantially equal to the external diameter at the bottom of the rim, characterised in that

     the reinforcing frame is in the form of a layer or sheet, inter alia of textile twisted cords or fabrics or twisted metal wires, and extends substantially over the entire width of the annular structure and is peripheral, i.e. disposed on the radially outer part of the structure so as to maintain a constant diameter corresponding to its position, and

     the sleeve is made up of a number of continuous separate annular components which are axially juxtaposed and which each comprise at least one projection and a part of the annular base structure so as together to form a single annular structure.

2. A device according to claim 1, characterised in that the sleeve is made up of two separate juxtaposed annular components (111, 142, 152) each comprising at least one salient projection (112, 142, 152).

3. A device according to claim 2, characterised in that the two components (111, 142) are juxtaposed exclusively at the level of the annular base structure (91), the internal sides of the two innermost salient projections (112, 142) of each component being spaced apart from one another.

4. A device according to claim 3, characterised in that the two juxtaposed components (11, 142) are symmetrical with respect to the central radial plane of the rim and each comprise a single projection (112, 142).

5. A device according to claim 4, characterised in that the upper surfaces of the two projections are horizontal.

6. A device according to claim 4, characterised in that the upper surfaces of the two projections (112) are inclined towards the exterior.

7. A device according to claim 4, characterised in that the upper surfaces of the two projections (142) are inclined towards the interior of the tyre, i.e. towards the aforementioned central radial plane and towards the rim.

8. A device according to claim 2, characterised in that the two components (151) are juxtaposed their entire height, i.e. at the level of the annular base structure (4) and of the inner sides of the two innermost salient projections (152), so that the last-mentioned juxtaposed projections form the two parts of a single central projection.

9. A device according to claim 8, characterised in that the two juxtaposed components (151) are symmetrical with respect to the radial central plane of the rim and each comprise one projection (152), the resulting two juxtaposed projections always forming the two parts of a single central projection.

10. A device according to claim 9, characterised in that the upper surfaces of the two juxtaposed parts of the single central projection are horizontal.

11. A device according to claim 9, characterised in that the upper surfaces of the two juxtaposed parts of the single central projection extends towards the inner surface of the tyre and converge in the central radial plane of the tyre so that the upper surface of the single central projection is in the form of a V having a projecting angle, a wide opening and a rounded apex.

12. A device according to claim 9, characterised in that the upper surfaces of the two juxtaposed parts (152) of the single central projection extend towards the bottom of the rim and converge in the central radial plane of the tyre, so that the upper surface of the single central projection is in the from of a V having a re-entrant angle and a wide opening.

13. A device according to claim 1, characterised in that the sleeve (1, 160) is made up of three separate juxtaposed annular components, i.e. two side components and a central component which separates the two side components.

14. A device according to claim 13, characterised in that the central component is interchangeable, depending on the various widths of rims.

15. A device according to claim 13 or 14, characterised in that the two side elements each have at least one salient projection.

16. A device according to claim 13 or 14, characterised in that the two side components and the central component each have at least one salient projection, the projections being spaced apart from one another.

17. A device according to claim 13 or 14, characterised in that the two side components (161) and the central component (165) are symmetrical with respect to the central radial plane of the rim and each component has a single projection (162, 166).

18. A device according to claim 17, characterised in that the upper surfaces of the two side projections and the central projection are horizontal.

19. A device according to claim 17, characterised in that the upper surfaces of the two side projections are inclined towards the exterior whereas the upper surface of the central projection is horizontal.

20. A device according to claim 17, characterised in that the upper surfaces of the two side projections (162) are inclined towards the interior, i.e. towards the aforementioned central radial plane and towards the rim, whereas the upper surface of the central projection (166) is horizontal.

21. A device according to any of claims 2, 3, 4, 7 or 13, 15, 16, 17, 20, characterised in that the sleeve (140, 160) comprises an additional continuous annular component (144, 164) which is surperposed on the (two or three) juxtaposed components (141; 161 and 165), and the bottom surface of the superposed component (144, 164), which faces the rim, is shaped so as to fit the upper surfaces of the various projections (142; 162 and 166) of the sleeve against which it abuts.

22. A device according to any of claims 8, 9 and 12, characterised in that the sleeve (150) comprises an additional continuous annular component (154) which is supperposed on the two juxtaposed components (151) over their entire height and the bottom surface of which, i.e. the surface facing the rim, is in the form of a projecting V fitting into the re-entrant V of the single two-part central projection of the sleeve.

23. A device according to either of claims 21 and 22, characterised in that the inner dimensions of the superposed component (144, 154, 164) at the level of those portions of its inner surface which abut the corresponding projections (142; 152; 162 and 166) of the separate juxtaposed components (141; 151; 161 and 165) are substantially less than the overall radial dimensions of the projections, so that the superposed element is secured by clamping around the separate juxtaposed components.

24. A device according to either of claims 21 and 22, characterised in that the superposed component (144, 154, 164) also has at least one annular reinforcing frame (158a, 158b, 158c) in the form of a layer or sheet and embedded in its base and adapted to make the superposed component non-stretchable.

25. A device according to claim 21, characterised in that the bottom surface of the superposed component (144, 164) between two contiguous projections (142; 162 and 166) has a projecting portion (146, 159) facing the rim and adpated to constitue and abutment enabling the superposed component to retain its position when driving on a flat tyre, the abutment also responding to the axial centrifugal forces acting on the tyre.

26. A device according to either of claims 21 and 22, characterised in that the superposed component (140) comprises at least one weight-reducing recess (100), inter alia annular, formed at the top thereof.

27. A device according to any of claims 1 to 20, characterised in that at least the outermost projections of the juxtaposed components (111) have a flange (133, 113, 112a) at their free end.

28. A device according to any of claims 21 to 26, characterised in that the component (144, 154, 164) superposed on the juxtaposed components (141, 151, 161) has a flange (143, 153, 163) at its free end.

29. A device according to either claims 27 and 28, characterised in that the flange (113, 133, 143, 153, 163) is annular and continuous, i.e. it surrounds the entire pheriphery of the aforementioned free end.

30. A device according to either of claims 27 and 28, characterised in that the annular flange (113) is adpated to bound at least the outer side of the free end of at least the outermost projections of the juxtaposed components or alternatively the two - necessarily external - sides of the free end the superposed component when present.

31. A device according to either of claims 27 and 28, characterised in that the flange is without acute angles.

32. A device according to either of claims 27 and 28, characterised in that the flange is substantially trapezoidal in shape.

33. A device according to claim 32, characterised in that, in the case where the flange bounds the projections, the flange has susbstantially the shape of a right-angled trapezium having dimensions such that:

$$B = \ell/2 \pm 25\,\%$$

and

$$b = \ell/4 \pm 25\,\%,$$

where

- $\ell$ is the width of the upper surface of the projection or projections in question,
- B is the major of the trapezium constituting the flange, and
- b is the minor base of the trapezium constituting the flange.

34. A device according to any of claims 1 to 33 for mounting on a demountable hollow-base tyre rim comprising two opposite beads in contact with the tyre beads, characterised in that the two beads of the rim each have a portion inclined to the horizontal and an arcuate support portion, the inclined portion extending from the inner part of the rim towards the exterior at an angle of less than 45° to the horizontal and ending in an arcuate support portion, which device is also characterised in that the inner parts of the tyre beads are supported by the inclined portions of the rim beads and the arcuate portions supporting the rim beads are in contact with the outer surfaces of the tyre beads.

35. A device according to claim 34, characterised in that annular supports disposed between the rim and the inner diameter of the sleeve are adapted to form a cylindrical surface near the inner diameter of the sleeve, the annular support comprising a rubber section member in contact with the rim and with the inner diameter of the sleeve.

FIG. 1

FIG. 2

FIG. 6

FIG. 3

FIG. 4

FIG. 5

FIG. 7

FIG. 8

FIG.9

FIG.10

FIG. 11

EP 0 159 274 B2

FIG.12

FIG.13

# FIG. 14

FIG. 15

FIG. 16